# DEMANDE DE BREVET EUROPEEN

(11) **EP 3 674 778 A1**
(43) Date de publication de la demande: **01.07.2020**
(21) Numéro de dépôt: 18020658.3
(22) Date de dépôt: 26.12.2018
(51) Int. Cl.: G02C 7/16, G02C 5/00, G02C 9/04, B29D 12/02

(54) **DISPOSITIF POUR LIRE EN VOITURE SANS NAUSÉES ET MAUX DE TÊTE**

(71) Demandeur: Deguise, Patrick, 60400 Pont L'Evêque (FR)
(72) Inventeur: Deguise, Patrick, 60400 Pont L'Evêque (FR)

(57) **Abrégé**

Dispositif pour lire en voiture sans nausées et maux de tête.

L'invention concerne un dispositif permettant de resserrer le champ visuel aux contours de la plage de lecture du document en coupant toute perception extérieure dans un véhicule en mouvement.

Il est constitué d'une monture binoculaire aux foyers opaques dotés chacun d'une fenêtre de vue restreinte de deux œillères permettant à l'utilisateur de lire dans un véhicule en mouvement sans nausées ni maux de tête.

Le dispositif selon l'invention est particulièrement destiné aux passagers situés à l'intérieur d'un véhicule en mouvement.

## Description

La présente invention concerne un dispositif de monture binoculaire complète et adaptateur pliable et clipsable sur lunette de vue dont le but consiste à éviter les nausées provoquées par la lecture d'un texte ou le visionnage d'une vidéo au sein d'un véhicule vitré en mouvement. Le concept porte le nom de Free Read Car System (FRCS).

Il est dit que le fait de se sentir mal lorsqu'on lit un livre, visionne une vidéo ou que l'on écrit une note en voiture qui se déplace relève tout simplement du mal des transports, appelé cinétose ou naupathie. Tout comme le mal de mer, il semblerait que les nausées ou les migraines viennent d'un décalage entre ce que voient les yeux qui ne perçoivent pas, ou peu, le mouvement et les capteurs neurosensoriels qui, eux, enregistrent tout mouvement du corps dans les trois dimensions. Il y aurait donc une différence entre ce qui est perçu par les yeux et ce qui est ressenti par l'oreille interne. De ce fait, le cerveau est perturbé par ces informations contradictoires qu'il reçoit et les nausées apparaissent très rapidement selon les sujets. Fort heureusement, tout le monde n'est pas sujet au mal des transports. Il semblerait que les enfants soient d'ailleurs plus touchés que les adultes, du fait que leur cerveau soit encore en construction. Lorsqu'on lit dans une voiture en mouvement, le risque de se sentir mal est encore plus important. Il est dit que lorsqu'on se concentre sur une page ou un écran, la confusion des sens est encore plus importante. Partant du principe que ces nausées apparaissent également dans une voiture en mouvement stable et sans balancement, nous pouvons donc en déduire que d'autres facteurs peuvent être en cause. La perception du défilement extérieur associée à la lecture d'un point fixe peut également envoyer au cerveau des informations contradictoires et contribuer aussi à l'apparition de ces nausées.

Ce hypothèse s'appuie à partir d'une observation faite sur une personne sensible à ce phénomène se déplaçant dans des conditions de déplacement particulières, à savoir la nuit. En effet, cette personne a pu lire et écrire la nuit sur une tablette sans problème à bord d'un véhicule vitré en mouvement durant un long moment sur une route non éclairée et non urbanisée. Nous pouvons donc en déduire que la perception des défilements extérieurs jouent un rôle important dans l'apparition de ces nausées et qu'ils en sont vraisemblablement la cause principale. Cette observation se confirme par le fait que cette gêne réapparaît dans les zones urbanisées et surtout éclairées. Partant de ce constat, il convenait de trouver un moyen d'annuler de jour la perception par l'œil des défilements extérieurs afin de permettre au cerveau de se concentrer uniquement sur une lecture en point fixe.

La nature de l'invention repose en une monture de lunette binoculaire ou adaptateur sur monture à verres correctifs dont les foyers sont partiellement opacifiés pour ne laisser apparaitre qu'une faible zone translucide qu'on appellera « fenêtre de vue ». Cet espace de vue, horizontal et d'une hauteur allant de 4 à 6 mm à partir du pont et sur une longueur de 30 à 40 mm permet de réduire considérablement le champ visuel du lecteur en le limitant aux seuls contours de la plage de lecture. L'élimination totale de la perception de l'environnement intérieur et surtout extérieur du véhicule est obtenue par des œillères placées de part et d'autre de la monture. Elles permettent quant à elles de fermer complètement le champ visuel latéral. La disparition de la perception des mouvements intérieurs et extérieurs est ainsi obtenue.

Plusieurs prototypes ont été réalisés à partir de lunettes de protection présentes sur le marché. La fenêtre de vue est obtenue à l'aide d'une épargne (adhésif) posée horizontalement sur les verres avant une mise en peinture complète de ces derniers y compris les œillères. L'épargne retirée, une fenêtre de vue translucide apparait sur chaque foyer. La production en série de la monture sera réalisée par injection plasturgique en plusieurs parties dans un moule, à savoir : les deux branches, les deux œillères et les deux foyers comportant chacun une ouverture de forme rectangulaire dans laquelle pourraient venir se clipser un insert translucide légèrement teinté pour plus de confort voire même adapté à la vue de prêt de l'utilisateur. Nous l'appellerons dans ce cas « Insert fenêtre ». Cet insert peut être en verre ou en polycarbonate. La zone de vision est ainsi obtenue tout simplement par ces deux fenêtres de lecture nues ou pourvues de deux inserts translucides corrigés ou non. Plusieurs prototypes ont été testés sur des personnes rencontrant des problèmes de lecture en voiture et les résultats sont très concluants. Le produit sera décliné sous forme de monture de lunette à géométries et finitions multiples. Sa fabrication se fera dans différentes matières (polymère, PVC, fibre de carbone, aluminium, verre, polycarbonate). Le concept est décliné également sous forme d'adaptateur pliable et clipsable sur lunette de vue. Le concept FRCS est donc décliné sous 5 modèles de base

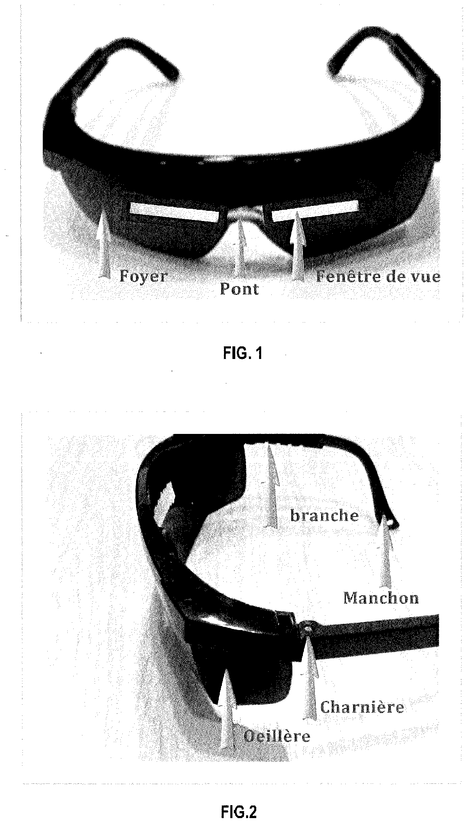

## Revendications

1. Dispositif de monture binoculaire complète et adaptateur pliable clipsable sur lunette de vue pour une utilisation dans un véhicule vitré en mouvement pour éviter les nausées provoquées par la lecture d'un texte ou le visionnage d'une vidéo au sein d'un véhicule vitré en mouvement.

2. Dispositif selon la revendication 1 **caractérisé en ce qu'**il comporte deux foyers opaques dotés chacun d'une fenêtre de vue horizontale créée en leur centre par un évidemment de la matière sur une hauteur de ladite meurtrière allant de 3 à 5 mm à partir du pont de la monture et sur une largeur de ladite meurtrière allant de 30 à 40 mm pour permettre d'éviter les nausées e ledit dispositif comporte deux œillères opaques disposées de part et d'autre de deux foyers opaques au départ des charnières de la monture.

3. Dispositif selon la revendication 1 ou 2 **caractérisé en ce que** l'ensemble des deux cercles opaques et des œillères opaques est lié par clips sur la monture.

4. Dispositif selon la revendication 3 **caractérisé en ce que** l'ensemble des deux cercles opaques et des œillères opaques est lié par clips sur la monture.
Suite à l'opinion écrite datée du 30/08/2018 nous présentons un nouveau jeu de revendications dans lequel la revendication principale a été libellé sous la forme d'un dispositif pour une utilisation le présent jeu de revendication rempli les conditions de brevetabilité ; en =effet aucun document cité par l'examinateur ne divulgue le dispositif de l'extension de l'invention pour éviter les nausées.....
Notons que l'examinateur retient le précédent jeu de revendication
